# EUROPEAN PATENT SPECIFICATION

(11) **EP 1 798 070 B1**
(45) Date of publication and mention of the grant of the patent: **25.03.2009**
(21) Application number: 05292699.5
(22) Date of filing: 15.12.2005
(51) Int. Cl.: B60C 11/24

(54) **Tyre with wear sensor**
Reifen mit Abriebsensor
Pneumatique comprenant un capteur d'usure

(43) Date of publication of application: 20.06.2007
(73) Proprietor: Société de Technologie Michelin, 63000 Clermont-Ferrand (FR); Michelin Recherche et Technique S.A., 1763 Granges-Paccot (CH)
(72) Inventor: Myatt, David, Pompignat, 63119 Chateaugay (FR)
(74) Representative: Bauvir, Jacques

(56) References cited:
- EP-A- 0 875 405
- WO-A-20/04068769
- WO-A-20/07002266
- DE-A1- 19 745 734
- DE-U1- 20 216 290

## Description

### FIELD OF INVENTION

The present invention concerns tyre wear control and in particular tyres that allow to automatically detect that a predetermined tyre wear threshold has been reached.

### DEFINITIONS

In the present document :

"cord" is understood to mean a single thread or wire, metallic or non metallic, or an assembly of several threads or wires ;

"ply" refers to a layer of parallel reinforcing cords, metallic or non metallic, woven or unwoven, and embedded in a rubber composition, the thickness of the ply being close to the diameter of an individual cord ;

"belt" refers to an assembly of at least two plies that is unanchored to the bead;

"axial" refers to a direction essentially parallel to the rotation axis of a tyre;

"radial" refers to a direction parallel to a vector perpendicular to the axial direction and which intersects the rotation axis of the tyre;

"tyre" refers to pneumatic or non pneumatic tyres.

### BACKGROUND OF INVENTION

As is known, the tread of a tyre undergoes wear that results from the rolling of the tyre on the ground. If the tread has grooves, the effect of this wear is to reduce the depth of the grooves, thereby degrading the performance of the tyre on wet ground. On reaching a certain wear level, referred to as "tread wear limit", the tyre no longer enables rolling to take place under optimum conditions. The tyre or its tread ("retreading") is then replaced and scrapped or, if the residual thickness of the tread so allows, the grooves of the tread are cut out afresh.

The wear level of a tread can be monitored by measuring the depth of the grooves, but that operation is often neglected because it is considered troublesome and because it requires a suitable measuring tool, which may not always be at hand. It has therefore long been proposed to position wear indicators on the rolling surfaces so as to visually alert the driver of the vehicle when the minimum tread groove depth has been reached. Prior art contains an almost innumerable variety of propositions to provide pieces of coloured rubber within the tyre tread which appear on the tread surface when a tyre wear threshold is reached. Industrial applications of such coloured wear indicators have nevertheless remained relatively rare, not least because their precise positioning within the tread is difficult to obtain and costly. More common visual tyre wear indicators take advantage of the visual contrast between the rubber forming the tread and a groove or cavity in the said tread.

Irrespective of their precise nature, visual tyre wear indicators have the drawback that the user has to has to periodically inspect the tyres in order to realise when the wear limit is reached. It has therefore been proposed (see, for example, US 2002/036039**)** to monitor the tread wear, as revealed by such wear indicators, by image analysis, which can be used to generate an alert signal as soon as the wear limit is reached.

Another, more direct way of obtaining information on the tread wear is to use magnetic or electrical sensors whose signals are altered as a function of tread wear.

There have been several proposals to use magnetic properties of the tread itself in order to detect the progress of wear : for instance, DE 199 54 825 divulges the use of tread blocks made from magnetic rubber, the presence (or absence) of which is detected. DE 199 57 645 extends this concept to providing areas of alternating magnetic polarity in the depth of the tread.

Another approach is to provide conductors inside the tread and to detect changes of measurable parameters related to the removal of these conductors by wear. DE 25 24 463 divulges the idea of incorporating an electrical conductor into the tread, such that the conductor is cut as soon as the wear limit is reached. The same concept has later been proposed by JP 61-150 804**.**

DE 197 45 734, corresponding to the preamble of claim 1, describes the use of a sensor comprising a number of conductive loops which extend at different heights in the tread and open successively as tread wear progresses, so that they form open switches ; a detection circuit delivers a corresponding signal to an assessment unit present in the vehicle.

DE 199 30 046 describes a tread containing a bundle of metallic cords located precisely at the minimum lawful profile depth and wearing away when the profile is worn below this depth. An induction current passing through the bundle changes as the diameter reduces and initiates an audible and/or visual warning.

WO 03/031208 describes a method consisting in measuring the electrical resistance or capacitance inside a tread block and deducing the height of the block therefrom.

US 2005/061069 teaches the incorporation into the tyre of a resonant circuit comprising several capacitors connected in parallel by means of conductive branches which extend into the tread. When the tread is worn, the branches extending into the worn part break, which changes the tuning frequency of the resonant circuit.

The present invention aims at improving this concept by simplifying the underlying tyre structure, taking advantage of the electromagnetic behaviour of the tyre's belt.

### SUMMARY OF THE INVENTION

This goal is achieved by a tyre comprising a tread and a belt comprising a first and a second ply, the first and second plies being made up of substantially parallel metallic reinforcing cords embedded in a rubber composition that are inclined with respect to the equatorial plane of the tyre, the cords of the first ply being inclined with respect to (and preferentially inclined oppositely to) the cords of the second ply, wherein at least one dipolar electric element connects at least one cord of the first ply to at least one cord of the second ply, the path followed by the dipolar electric element between the cord of the first ply and the cord of the second ply extending into the part of the tread that can be worn away before reaching the tread wear limit, such that at least one characteristic of the dipolar electric element is modified as a consequence of tyre wear before or when the tread wear limit is reached.

In other words, the invention consists in a tyre comprising a tread and a belt comprising a first and a second ply, the first and second plies being made up of substantially parallel metallic reinforcing cords embedded in a rubber composition that are inclined with respect to the equatorial plane of the tyre, the cords of the first ply being inclined with respect to (and preferentially inclined oppositely to) the cords of the second ply, the tyre moreover comprising at least one resonant circuit formed by a plurality of inductances and capacities and at least one dipolar electric element connecting capacities of the resonant circuit and extending into the part of the tread that can be worn away before reaching the tread wear limit, such that at least one characteristic of the dipolar electric element is modified as a consequence of tyre wear before or when the tread wear limit is reached, the resonant circuit being formed by elements of the belt of the tyre.

According to a first preferred embodiment, the dipolar element is a capacitor whose capacity is continuously modified as a consequence of tyre wear. The capacitor may be a variable capacitor which is arranged such that the capacity of the capacitor changes as a function of tyre wear. Thus an *in situ* measurement of the degree of wear is made possible.

According to a second preferred embodiment, the dipolar element is a resistance whose resistance value is modified as a consequence of tyre wear.

In a first variant of this concept, the resistance is designed to break when a predetermined wear threshold is reached. The measurement is of the "all or nothing" type and only allows to determine whether the threshold has been reached or not ; there is no information on the actual degree of wear.

In a second variant, the resistance is a variable resistance which is arranged such that its resistance value changes as a function of tyre wear. Therefore an *in situ* measurement of the degree of wear can be obtained.

Of course, it is possible to combine the first and the second embodiments by using a dipolar element that has both capacitive and resistive properties.

### BRIEF DESCRIPTION OF THE DRAWINGS

The invention may be better understood by reference to the detailed description which follows and to the drawings, in which :
- figure 1 is a schematic view of a pneumatic radial tyre ;
- figure 2 is a schematic representation of the lattice formed by the cords of two breaker plies ;
- figure 3 is a schematic representation of a resonant circuit formed by the cords of two adjacent breaker plies ;
- figure 4 is a schematic representation of the resonant circuit corresponding to the arrangement of figure 3 ;
- figure 5 is a schematic representation of a partial radial section of a tyre according to the invention ;
- figure 6 is a schematic perspective view of cords forming a resonant circuit and a dipolar element connecting two of the cords ;
- figures 7 and 8 are schematic representations of resonant circuits corresponding to the belt of a tyre according to the invention ;
- figure 9 is a schematic representation of a partial radial section of a tyre according to the invention.

### DESCRIPTION OF PREFERRED EMBODIMENTS

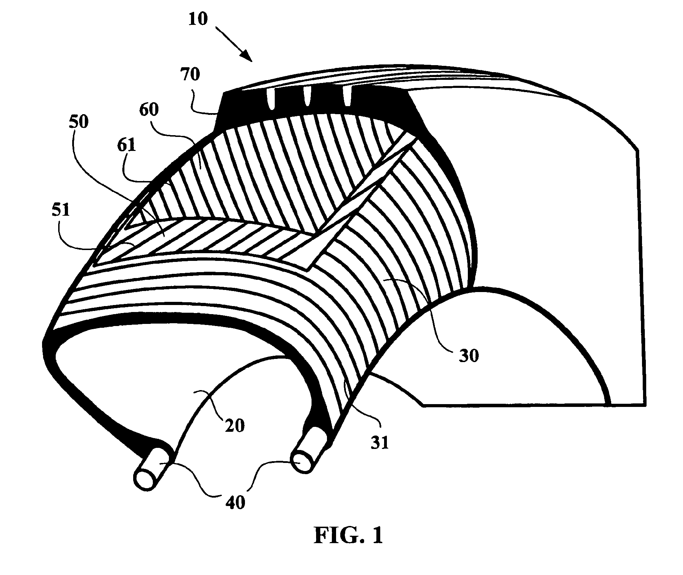

Figure 1 schematically represents the structure of a radial pneumatic tyre 10 comprising an inner liner 20 made of airtight synthetic rubber, a carcass ply 30 composed of textile cords 31, laid down in straight lines and sandwiched in rubber, bead wires 40 holding the tyre 10 onto the rim (not illustrated), a breaker belt made of at least two radially adjacent breaker plies 50 and 60, and a tread 70 laid over the breaker plies 50 and 60 to be in contact with the road. Each of the two breaker plies 50 and 60 of tyre 10 is reinforced with steel cords 51 and 61 that are inclined with respect to the equatorial plane of the tyre at an appropriate angle (typically around 20°), the cords 51 of one ply being inclined oppositely to the cords 61 of the other ply.

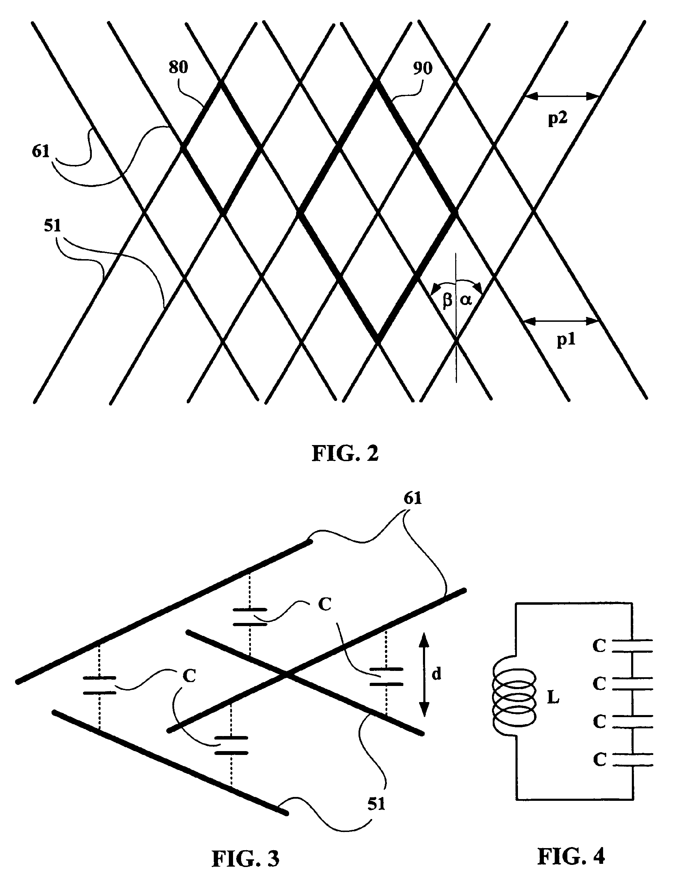

This particular arrangement of the plies comprised in the breaker belt explains the strong absorption of electromagnetic radiation in the belt. As schematically represented in figure 2, the sets of cords 51 and 61 of the adjacent plies 50 and 60 form a lattice comprising a great number of elementary 80 and composite 90 parallelograms.

As shown in figure 3, each of these parallelograms constitutes a resonant circuit : the four sides of the parallelogram formed by parts of cords of the belt can be considered as a loop of inductance L, whereas the cord-rubber composition-cord interface at each of the angles of the parallelogram constitutes a capacity C. Figure 4 shows the equivalent LC circuit.

As it is well known, a resonant circuit can be excited by electromagnetic radiation of a frequency that is close to its resonant frequency. The more circuits are excited, the stronger the electromagnetic radiation is absorbed. The great number of circuits of varying shapes (and, therefore, of varying inductance L) present in the belt of a tyre explains the fact that the absorption function is of complex shape. Its characteristics are influenced by the nature of the cords 51 and 61, the number and structure of plies 50 and 60, the distance d between adjacent breaker plies 50 and 60, resistivity of the rubber composition used in the breaker plies 50 and 60, the inclination alpha (α) and beta (β) of the cords 51 and 61 of the breaker plies 50 and 60 with respect to the circumference of the tyre 10, the pitch p1 and p2 of the breaker plies, the diameter and the high frequency conductivity of metallic cords 51 and 61 etc.

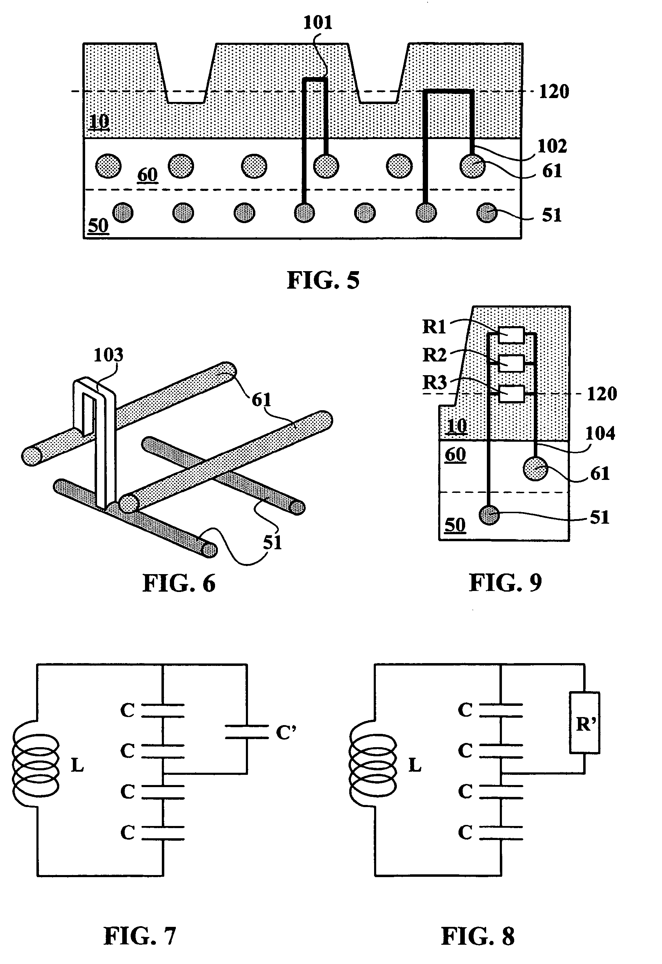

The present invention consists in the use of the resonant circuits formed by the tyre belt for measuring the wear of the tyre tread. This use is made possible by introducing a dipolar connecting element, as shown in figure 5. The dipolar elements 101 and 102 connect at least one cord 51 of the first ply 50 to at least one cord 61 of the second ply 60, and extend into the part of the tread 10 that can be worn away before reaching the tread wear limit (indicated by the dashed line 120). In this particular (but non limitative) example, the dipolar elements are electrically conductive staples designed to break *before* the wear limit is reached (element 101) or exactly *when* this limit is reached (element 102).

Figure 6 gives a schematic perspective view of cords 51 and 61 forming a resonant circuit and a dipolar element 103 connecting two of the cords.

As illustrated in figures 7 and 8, the role of the dipolar elements is to short-circuit partly the resonant circuits formed by the cords of the belt and thus to modify the absorption behaviour of the belt. As soon as the characteristics of the dipolar elements (capacity C', resistance value R' etc.) change as a consequence of wear, the absorption behaviour of the belt is modified. This modification can be detected at a distance by a detector mounted on the vehicle, using means known to the person skilled in the art, and, for example, be used to trigger an alert signal.

The change of the characteristics of the dipolar element can be abrupt ("all or nothing") in which case it only allows to determine whether the threshold has been reached or not. The dipolar elements represented in figures 5 and 6 are of this type : as soon as the electrically conductive staples break, the resistance value R' (figure 8) increases dramatically, which thoroughly modifies the resonance frequency of some of the LC circuits formed by the belt.

It is of course possible to use several dipolar elements extending to different heights into the tread (such as elements 101 and 102 of figure 5) and to combine the threshold measurements so obtained to reconstruct the degree of wear.

The change in absorption frequency has been measured on a tyre belt formed of two plies. When two cords belonging to different plies are short-circuited by a dipolar element, the resonance frequency is 18.8 MHz. This frequency shifts to 20 MHz as soon as the connection between the two cords is broken. The frequency shift of 1.2 MHz is enough to be detected, but it could still be increased, for example by increasing the number of dipolar elements or by judiciously choosing the emplacement of the dipolar element.

It is, however, also possible to have a dipolar element whose characteristics change stepwise or even continuously. If such an element is used, it is possible to carry out a measurement of the degree of wear of the tread block or rib into which the dipolar element extends. A very simple case is represented in figure 9. The dipolar element 105 connecting cords 51 and 61 comprises several resistances R1, R2, and R3. As wear progresses, the overall resistance of dipolar element 105 changes, R1, R2, and R3 being removed progressively. When the wear limit 120 is reached, there is no more electrically conductive connection between cords 51 and 61. The person skilled in the art is able, by appropriately choosing the resistance values, to produce a change of the resonance frequency of the resonating circuit such that the detected frequency can be used to identify the corresponding degree of wear and the quantity of rubber (thickness of rubber) still to be worn before the wear limit is reached.

It goes without saying that the resistances of figure 9 could be replaced by capacities. Combinations of resistances and capacities could be used as well.

In the examples represented in figures 5 to 8, only two of the four cords forming the resonant circuit are connected by a dipolar element, but this is not a limitative feature. If the four cords are connected by electrically conductive dipolar elements, there is no resonance. Only when at least one of the dipolar elements breaks the resonating circuit begins to effectively resonate, which can be detected by means known to the person skilled in the art.

It is of course possible to combine within a tyre some or all of the different embodiments of the invention presented above.

## Claims

1. Tyre comprising a tread (70) and a belt comprising a first (50) and a second ply (60), the first and second plies being made up of substantially parallel metallic reinforcing cords (51;61) embedded in a rubber composition that are inclined with respect to the equatorial plane of the tyre, the cords (51) of the first ply (50) being inclined with respect to the cords (61) of the second ply (60), the tyre moreover comprising at least one resonant circuit formed by a plurality of inductances (L) and capacities (C) and at least one dipolar electric element (101,102) connecting capacities (C) of the resonant circuit and extending into the part of the tread (70) that can be worn away before reaching the tread wear limit, such that at least one characteristic of the dipolar electric element (101,102) is modified as a consequence of tyre wear before or when the tread wear limit is reached, the tyre being **characterised in that** the resonant circuit is formed by elements of the belt of the tyre.

2. Tyre according to Claim 1, **characterised in that** the cords of the first ply (50) are inclined oppositely to the cords of the second ply (60).

3. Tyre according to Claim 1 or 2, **characterised in that** said dipolar element (101,102) is a capacitor and **in that** its capacity (C) is modified as a consequence of tyre wear.

4. Tyre according to Claim 3, **characterised in that** said capacitor is a variable capacitor which is arranged such that the capacity of the capacitor changes as a function of tyre wear.

5. Tyre according to Claim 1 or 2, **characterised in that** said dipolar element (101,102) is a resistance and **in that** its resistance value is modified as a consequence of tyre wear.

6. Tyre according to Claim 5, **characterised in that** said resistance is broken when a predetermined wear threshold is reached.

7. Tyre according to Claim 5, **characterised in that** said resistance is a variable resistance which is arranged such that its resistance value changes as a function of tyre wear.

## Patentansprüche

1. Reifen mit einer Lauffläche (70) und einem Gürtel, der eine erste (50) und eine zweite Lage (60) umfaßt, wobei die erste und die zweite Lage aus im Wesentlichen parallelen metallischen Verstärkungskorden (51; 61) bestehen, die in einer Kautschukzusammensetzung eingebettet und bezüglich der Äquatorebene des Reifens geneigt sind, wobei die Korde (51) der ersten Lage (50) bezüglich der Korde (61) der zweiten Lage (60) geneigt sind, wobei der Reifen des Weiteren mindestens einen Resonanzkreis umfaßt, der durch mehrere Induktivitäten (L) und Kapazitäten (C) und mindestens ein dipolares elektrisches Element (101, 102), das Kapazitäten (C) des Resonanzkreises verbindet und sich in den Teil der Lauffläche (70) erstreckt, der vor Erreichen der Laufflächenverschleißgrenze verschlissen werden kann, gebildet wird, so daß mindestens eine Eigenschaft des dipolaren elektrischen Elements (101, 102) infolge von Reifenverschleiß vor oder während Erreichen(s) der Laufflächenverschleißgrenze geändert wird,
**dadurch gekennzeichnet, daß** der Resonanzkreis durch Elemente des Reifengürtels gebildet wird.

2. Reifen nach Anspruch 1, **dadurch gekennzeichnet, daß** die Korde der ersten Lage (50) entgegengesetzt den Korden der zweiten Lage (60) geneigt sind.

3. Reifen nach Anspruch 1 oder 2, **dadurch gekennzeichnet, daß** das dipolare Element (101, 102) ein Kondensator ist und daß seine Kapazität (C) infolge von Reifenverschleiß geändert wird.

4. Reifen nach Anspruch 3, **dadurch gekennzeichnet, daß** der Kondensator ein veränderbarer Kondensator ist, der so angeordnet ist, daß sich die Kapazität des Kondensators als Funktion von Reifenverschleiß ändert.

5. Reifen nach Anspruch 1 oder 2, **dadurch gekennzeichnet, daß** das dipolare Element (101, 102) ein Widerstand ist und daß sein Widerstandswert infolge von Reifenverschleiß geändert wird.

6. Reifen nach Anspruch 5, **dadurch gekennzeichnet, daß** der Widerstand unterbrochen wird, wenn eine vorbestimmte Verschleißschwelle erreicht ist.

7. Reifen nach Anspruch 5, **dadurch gekennzeichnet, daß** der Widerstand ein variabler Widerstand ist, der so angeordnet ist, daß sich sein Widerstandswert als Funktion von Reifenverschleiß ändert.

## Revendications

1. Bandage de roue comprenant une bande de roulement (70) et une ceinture constituée d'une première couche (50) et d'une deuxième couche (60), la première et la deuxième couche étant constituées de câbles métalliques de renfort (51; 61) essentiellement parallèles, incorporés dans une composition de caoutchouc et inclinées par rapport au plan équatorial du bandage, les câbles (51) de la première couche (50) étant inclinés par rapport aux câbles (61) de la deuxième couche (60), le bandage comprenant en outre au moins un circuit résonant formé par plusieurs inductances (L) et capacités (C) et au moins un élément électrique dipolaire (101, 102) qui relie les capacités (C) du circuit résonant et qui s'étend dans la partie de la bande de roulement (70) qui peut être usée avant d'atteindre la limite d'usure de la bande de roulement, de telle sorte qu'au moins une caractéristique de l'élément électrique dipolaire (101, 102) soit modifiée suite à l'usure du bandage avant que ou lorsque l'usure de la bande de roulement est atteinte, le bandage étant **caractérisé en ce que** le circuit résonant est formé par des éléments de la ceinture du bandage.

2. Bandage selon la revendication 1, **caractérisé en ce que** les câbles de la première couche (50) sont inclinés en opposition à l'inclinaison des câbles de la deuxième couche (60).

3. Bandage selon les revendications 1 ou 2, **caractérisé en ce que** ledit élément dipolaire (101, 102) est un condensateur et **en ce que** la capacité (C) change en fonction de l'usure du bandage.

4. Bandage selon la revendication 3, **caractérisé en ce que** ledit condensateur est un condensateur variable agencé de telle sorte que la capacité du condensateur change en fonction de l'usure du bandage.

5. Bandage selon les revendications 1 ou 2, **caractérisé en ce que** ledit élément dipolaire (101, 102) est une résistance et **en ce que** la valeur de sa résistance change en fonction de l'usure du bandage.

6. Bandage selon la revendication 5, **caractérisé en ce que** ladite résistance se rompt lorsqu'un seuil d'usure prédéterminé est atteint.

7. Bandage selon la revendication 5, **caractérisé en ce que** ladite résistance est une résistance variable agencée de telle sorte que la valeur de sa résistance change en fonction de l'usure du bandage.
